# EUROPEAN PATENT APPLICATION

(11) **EP 3 954 610 A1**
(43) Date of publication of application: **16.02.2022**
(21) Application number: 21189603.0
(22) Date of filing: 04.08.2021
(51) Int. Cl.: B64D 11/06

(54) **AIRCRAFT SEATS WITH AIR VENTS**

(30) Priority: 04.08.2020 IN 202041033375; 27.05.2021 US 202117332078
(71) Applicant: B/E Aerospace, Inc., Winston-Salem, NC 27105 (US)
(72) Inventor: PALANISAMY, Jai Ganesh, 560037 Bangalore (IN)
(74) Representative: Dehns

(57) **Abstract**

An aircraft passenger seat ventilation system is disclosed. The ventilation system comprises one or more passenger seats (110, 120), one or more partitions (200) at a respective armrest portion of the one or more passenger seats, one or more vents (210, 215) along one or more sides of the one or more partitions comprising a plurality of holes, and a suction source configured to suction air from the one or more vents to an air filtration system (120). The ventilation system provides hygienic travel experiences for passengers and crew members by minimizing the spread of viruses and/or bacteria within the aircraft cabin caused by turbulent air flow.

## Description

### BACKGROUND

Airlines face significant challenges with respect to contagions, especially in light of the COVID-19 pandemic. When a traveler or passenger boards an aircraft, there is a possibility that the passenger may introduce pathogens (e.g., viruses and/or bacteria) onto the interior surfaces of the aircraft and the air in the passenger cabin. Since aircraft seating layouts effectively utilize limited space, passengers may sit closely together, thus increasing the risk of spreading airborne diseases. Thus, it would be desirable to provide hygienic travel experiences for passengers and crew members by minimizing the spread of viruses and/or bacteria within the aircraft cabin.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is an isometric view of aircraft seats, in accordance with one or more embodiments of the present disclosure.
FIG. 1B is an isometric view of aircraft seats, in accordance with one or more embodiments of the present disclosure.
FIG. 1C is a rear isometric view of aircraft seats, in accordance with one or more embodiments of the present disclosure.
FIG. 2 is an isometric view of aircraft seats, in accordance with one or more embodiments of the present disclosure.
FIG. 3 is a block diagram of an aircraft seat ventilation system, in accordance with one or more embodiments of the present disclosure.
FIG. 4 is a front view of aircraft seats, in accordance with one or more embodiments of the present disclosure.
FIG. 5 is a conceptual drawing illustrating air flow in a conventional aircraft cabin.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting. As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present). In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

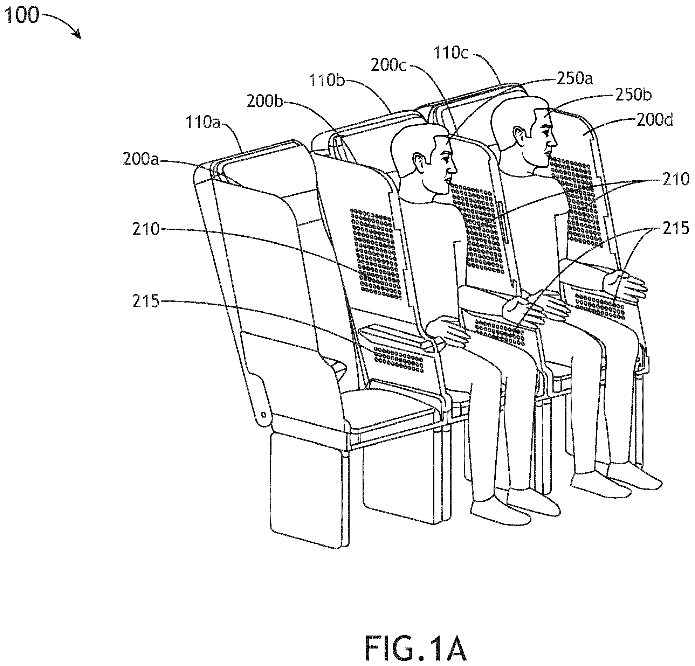

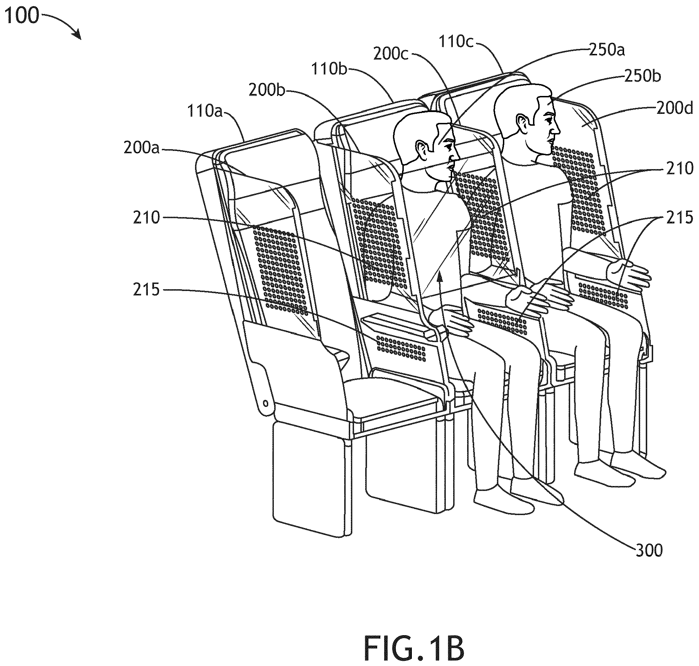

FIGS. 1A-3 generally illustrate an aircraft seat ventilation system 100 of an aircraft cabin, in accordance with one or more embodiments of the present disclosure. The aircraft seat ventilation system 100 may comprise one or more passenger seats 110a-e and 120a-c, one or more partitions 200a-g, one or more side vents 210 and 215, one or more rear vents 220 and 225, and a front cover 300.

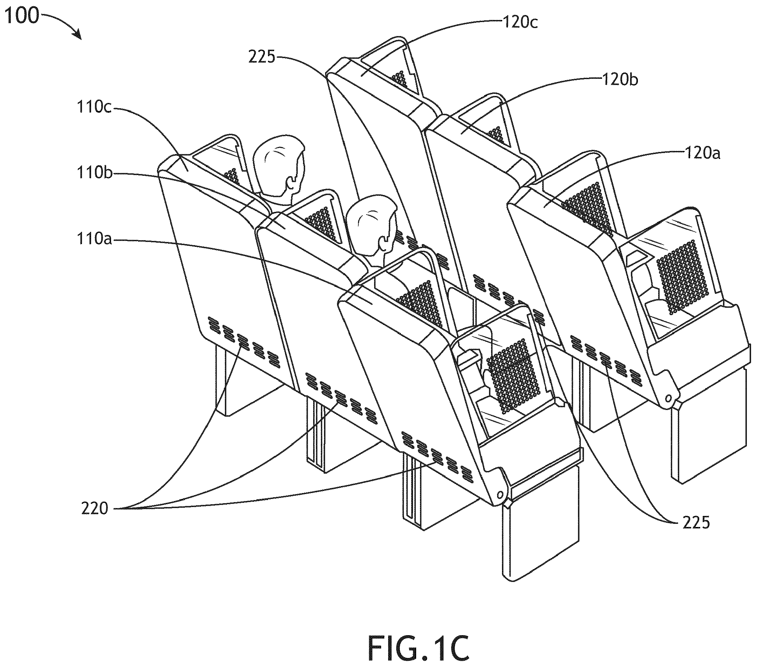

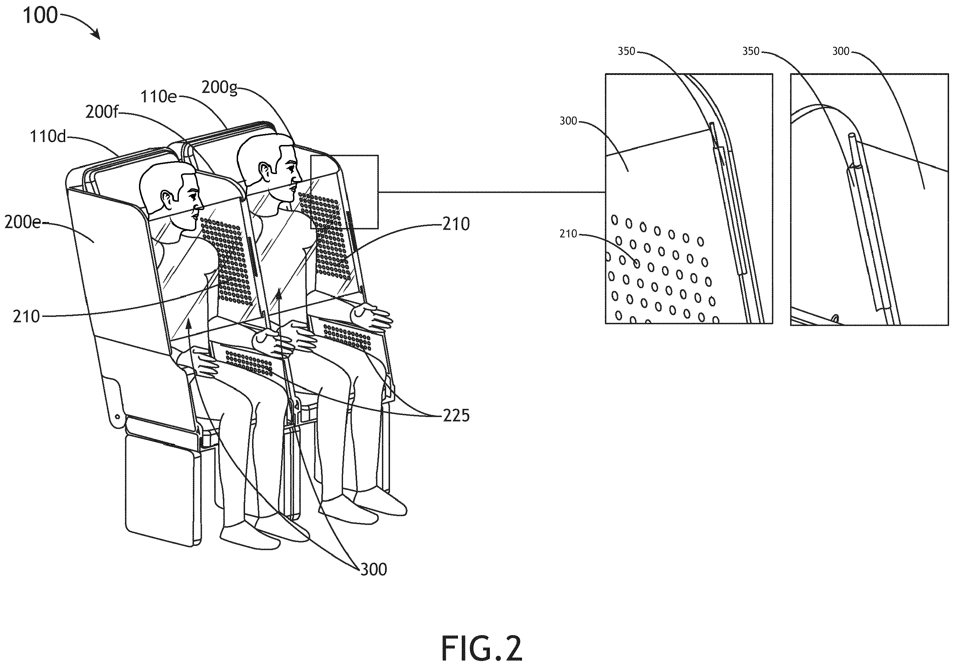

Aircraft cabins may include multiple rows of passenger seats. In one example illustrated in FIG. 1C, a first row may include at least three passenger seats 110a-c, a second row may include at least three passenger seats 120a-c, etc. Additionally, the rows may be split into sections of two seats, sections of three seats, etc. In another example illustrated in FIGS. 2-3, a section of a row may include two passenger seats 110d and 110e. Although the embodiments of the present disclosure illustrate a passenger seat ventilation system 100 for two or three passenger seats in a row, it is noted that the passenger seat ventilation system 100 may also be assembled for individual seats or any other number of seats in a row. It is further noted that although present embodiments of the disclosure illustrate main cabin economy passenger seating, the present disclosure may also be configured for crew seating, business class passenger seating, or first class passenger seating.

Each passenger seat 110a-e and 120a-c may include a seat back cushion. The seat back cushion may include a head rest. For example, the head rest may be integrated within the seat back cushion. By way of another example, the head rest may be a separate component coupled to or inserted into the seat back cushion. For instance, the head rest may be movable relative to the seat back frame of the respective passenger seat (e.g., adjustable, removable, or the like). Each passenger seat may include a seat bottom. For example, the seat bottom may be integrated within the seat back cushion. By way of another example, the seat bottom may be a separate component coupled to or inserted into the seat back cushion. Each passenger seat may include an armrest. The armrest may be coupled to either side of the respective passenger seat by any means known in the art including, but not limited to, mount brackets, plugs, screws, or the like.

As illustrated in FIGS. 1A-2, the system 100 may include one or more partitions 200a-g. Each partition 200a-g is configured to separate individual passenger seats 110a-e and 120a-c from other passenger seats and/or the aircraft aisle. For example, the one or more partitions 200a-g may be coupled to a passenger seat, or any portion of the passenger seat (e.g., seat back, seat bottom, and/or armrests) by any means known in the art including, but not limited to, clamps, fasteners, an interlocking assembly (e.g., rod and channel), or adhesive.

In some embodiments, each partition 200a-g may be detachable to reduce the weight of the aircraft (e.g., during non-pandemic times). For example, the partitions 200a-g may attach to the seats 110a-e using a snapping or locking mechanism. Each partition 200a-g may also be configured to be slidable so that the partition 200a-g slides with the respective seat 110a-e when reclining the respective seat 110a-e. The one or more partitions 200a-g may be opaque, translucent or transparent. The one or more partitions 200a-g may be sized to match the proportions of the passenger seat. For example, as shown in FIGS. 1A-2, the one or more partitions 200a-g may extend from the seat bottom to the head rest. By way of another example, the one or more partitions 200a-g may be taller than the passenger seat, reaching up to the ceiling of the aircraft cabin.

As illustrated in FIGS. 1A-1C, the one or more partitions 200a-g may be situated on either side of the respective passenger seats 110a-c or 120a-c at the respective armrest portions. For example, the partitions 200a-g may include a lower partition positioned proximately below the armrest portion. By way of another example, the partitions 200a-g may include an upper partition positioned proximately above the armrest portion. It is herein noted that the partitions 200a-g may be positioned exterior, within a portion, or interior to the passenger seat.

As illustrated in FIG. 2, one or more front covers 300 may be attachable and detachable from the partitions 200a-g. The respective front cover(s) 300 may couple to respective partitions 200a-g using a clipping mechanism 350. Alternatively, the front cover(s) 300 may couple to an interior of the partitions 200a-g via any means known in the art such as, but not limited to, suction, a screw assembly, an interlocking assembly (e.g. rod and channel), or the like. Further, the front cover(s) 300 may be rigid or flexible. The front cover(s) 300 may be transparent and may be designed to substantially overlap with the mouth or face of a passenger (e.g., to block droplets from a sneeze or cough). The front cover(s) 300 may further increase protection from pathogens and may create a ducted air flow for individual passengers at each passenger seat. Air originating from the passenger service unit may be restricted to flow in the duct (e.g., formed by the backrest of the seat, the partitions on both sides, and the front cover) such that air that flows around the passenger is suctioned to the vents 210, 215 and 220. This duct effect may prevent the cross contamination between passengers by channeling the air surrounding each passenger away from others of the passengers. The front cover 300 may be reusable or disposable after every fight. The front cover 300 may be designed to be easily detachable in response to the passenger unknowingly colliding or knocking the front cover 300 (without any discomfort to the passenger and without any damage to the front cover 300 or to the attachment mechanism). In some embodiments, the front cover 300 may be provided by the airline operator to the passenger as part of a safety kit or a complementary travel kit.

As illustrated in FIGS. 1A-2, the one or more partitions 200a-g of the passenger seat may include one or more vents 210 and 215. The vents 210 and 215 may comprise a plurality of holes substantially along a side of the partitions 200a-g. The upper vents 210 may be situated above the respective armrest portion along the upper partition, and the lower vents 215 may be situated below the respective armrest portion along the lower partition. If the respective partition 200a-g is a partition between two seats (for example, the partitions 200b, 200c, and 200f), both sides of the partition may include the vents 210 and 215. If the respective partition 200a-g borders an aisle in addition to a passenger seat, the side of the partition 200a-g facing the passenger may include the vents 210 and 215, while the side facing the aisle may be substantially flat without vents.

The vents 210 and 215 may be configured to suction air that is exhaled by the respective passengers seated in the seats 110a-e and 120a-c and the ambient cabin air. For example, air that is exhaled by a passenger 250a may be suctioned by the vents 210 and 215 on the sides of partitions 200b and 200c facing the passenger 250a, and air that is exhaled by a passenger 250b may be suctioned by the vents 210 and 215 on the sides of partitions 200c and 200d facing the passenger 250b. The upper vents 210 may be disposed on the sides of the partitions 200a-g substantially adjacent to the torso or head of the respective passenger to capture exhaled air. The lower vents 215 may be disposed on the sides of the partitions 200a-g substantially adjacent to the legs of the respective passenger, and may be configured to draw air moving toward the ceiling (e.g., uncontrolled, vortex-like air flow).

The one or more vents 210 and 215 may be fluidically coupled to a suction source. The partitions 200a-g may include or may be coupled to one or more cavities and/or one or more tubes or conduits for transporting the air suctioned by the vents 210 and 215. The one or more vents 210 and 215 may create a downward flow of air from the respective passenger seat 110a-e or 120a-c via the suction source. It is herein noted that the suction source may include, but is not limited to a vacuum source. Additionally, the system 100 may include one or more rear vents 220 and 225 substantially similar in function to the vents 210 and 215. The rear vents 220 and 225 may be situated at a rear side of the seats 110a-c and 120a-c and may be configured to suction air exhaled by the passengers that passes adjacent to the floor of the aircraft cabin.

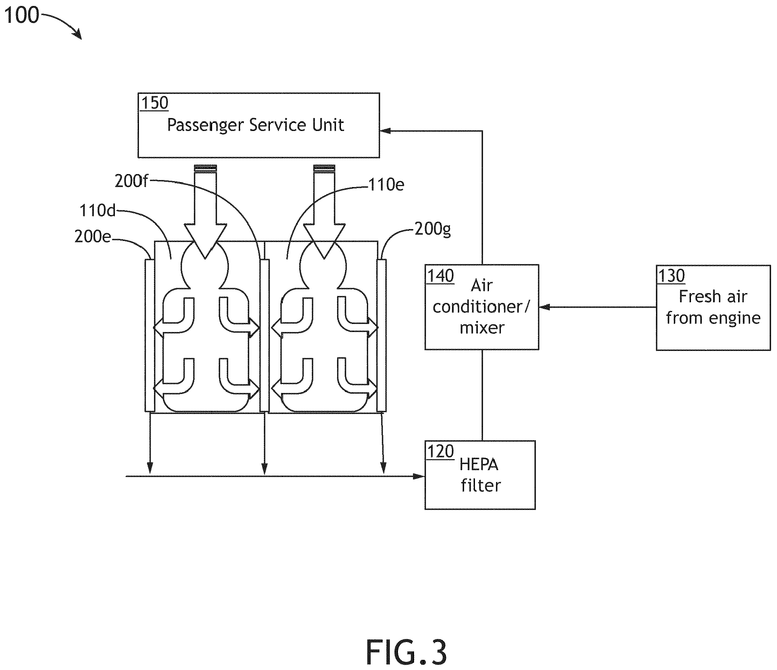

FIG. 3 is a block diagram generally illustrating the aircraft passenger seat ventilation system 100, in accordance with one or more embodiments of the present disclosure. As an example, passengers seated in the seats 110d and 110e may inhale air expelled from a passenger service unit (PSU) 150 by one or more air outlets, louvers, and/or gaspers. The passengers may then exhale air which may be suctioned through the one or more vents 210 and 215 and transported to an air filtration system 120. The air filtration system 120 may be a High Efficiency Particulate Air (HEPA) filter system designed to trap 99.97 percent of particles that are 0.3 microns or larger. The filtered air may then be mixed with fresh air 130 from the engine in an air conditioner/mixer 140, and transported to the air outlet of the PSU 150. In this way, cabin air may be recycled in a controlled manner. Additionally, some air may be discharged from the aircraft to regularize the cabin pressure (e.g., using a cabin pressure control valve).

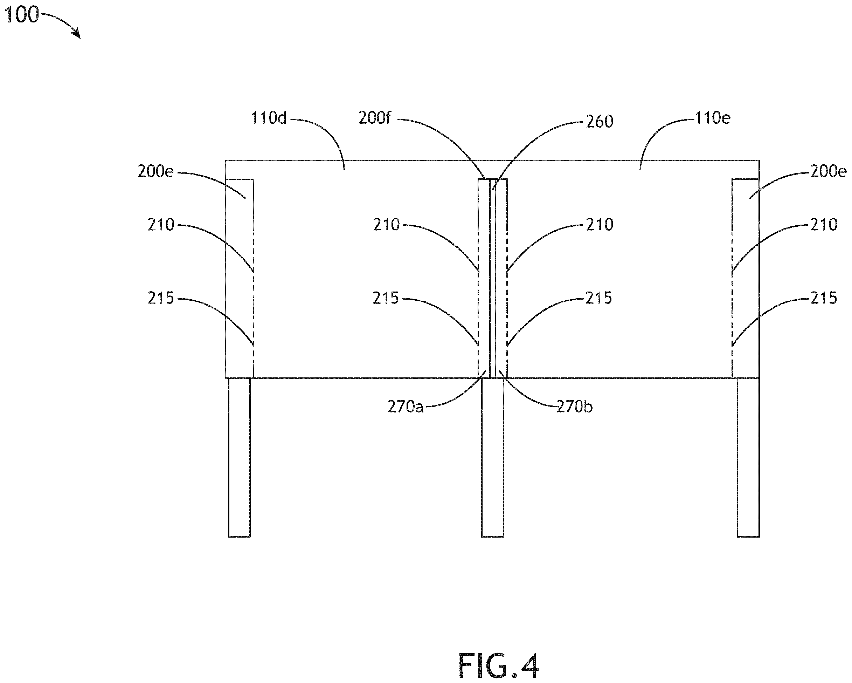

FIG. 4 is a front view of the seats 110d and 110e, in accordance with one or more embodiments of the present disclosure. The medial partition 200f may include two cavities 270a and 270b separated by a divider 260 (e.g., a wall). The divider 260 may be configured to separate the cavity 270a from the cavity 270b and create an air seal so that air from the cavity 270a does not mix with air from the cavity 270b, and vice versa. In this way, air exhaled from a passenger seated on seat 110d may be further prevented from mixing with air exhaled from a passenger seated on seat 110e. Additionally, the divider may enable a single partition to be placed between two adjacent seats (e.g., at the arm rest), thus reducing manufacturing complexity and costs by removing the need for two partitions at the same location.

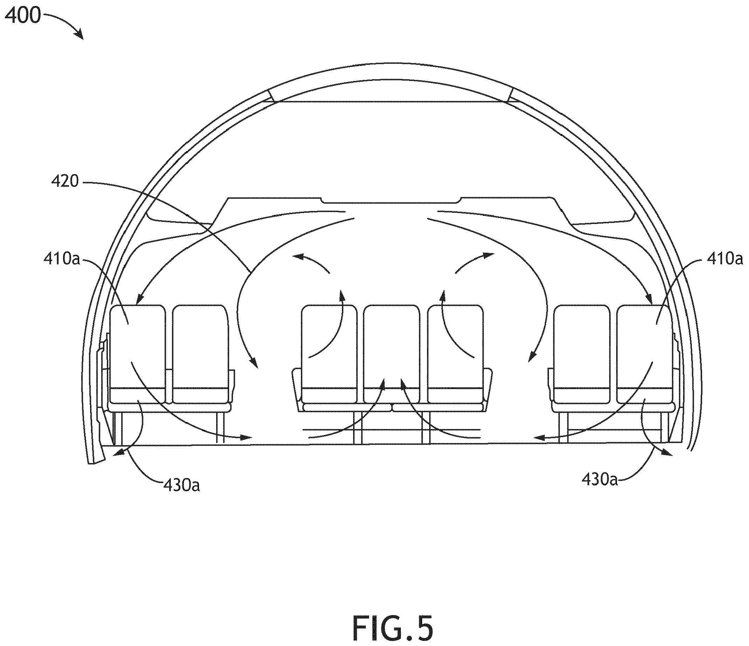

FIG. 5 shows a conventional or traditional aircraft cabin 400 with a circular or turbulent airflow 420. As shown, some of the air originating from the ceiling of the cabin 400 (e.g., from the gaspers of a PSU) may pass by the seats 410a-g and may be suctioned by vents 430a-b near the floor of the aircraft. However, as seen by the vortex-like pattern of the turbulent airflow 420, air that passes the seats along the side of the aircraft may eventually pass the seats at the center of the aircraft, thus increasing the risks of contagions spreading.

The present system 100 advantageously reduces the risk of spreading pathogens due to turbulent cabin air flow. The vents 210 and 215 along the sides of the partitions 200a-f of the present system 100 may prevent turbulent airflow by suctioning the air before the air travels past the passengers and their respective seats. Additionally, the lower vents 215 and the back vents 220 and 225 may suction any residual air adjacent to the floor of the aircraft cabin, thus reducing the risk of the air adjacent to the floor from being swept up into the faces of the passengers. Furthermore, the present system 100 may be easily retrofitted with existing aircraft with minor modifications.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the scope of the invention as defined by the claims and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. An aircraft passenger seat ventilation system, comprising:
one or more passenger seats (110a-e, 120a-c);
one or more partitions (200a-g), wherein each of the one or more partitions is at a respective armrest portion of the one or more passenger seats;
one or more vents (210, 215) along one or more sides of the one or more partitions, wherein each of the one or more vents comprises a plurality of holes; and
a suction source configured to suction air from the one or more vents to an air filtration system (120).

2. The aircraft passenger seat ventilation system of claim 1, wherein each of the one or more partitions comprises an upper partition above the armrest portion and a lower partition below the armrest portion.

3. The aircraft passenger seat ventilation system of claim 2, wherein the one or more vents comprise upper vents (210) along the upper partition and lower vents (215) along the lower partition.

4. The aircraft passenger seat ventilation system of claim 3, wherein the upper vents (210) are configured to suction air substantially adjacent to a head or a torso of a user, wherein the lower vents (215) are configured to suction air substantially adjacent to the legs of the user.

5. The aircraft passenger seat ventilation system of any preceding claim, wherein the one or more partitions includes at least one medial partition (200f) having a first side and a second side, wherein the one or more vents includes first vents along the first side and second vents along the second side.

6. The aircraft passenger seat ventilation system of claim 5, wherein the at least one medial partition includes a divider (260) configured to separate a first cavity (270a) in the at least one medial partition from a second cavity (270b) in the at least one medial partition.

7. The aircraft passenger seat ventilation system of any preceding claim, wherein the air filtration system (120) is a high efficiency particulate air, HEPA, filter.

8. The aircraft passenger seat ventilation system of any preceding claim, comprising (140) an air conditioner configured to mix the air with fresh air from an engine of an aircraft.

9. The aircraft passenger seat ventilation system of claim 8, comprising a passenger service unit, PSU, configured to expel the air mixed with the fresh air.

10. The aircraft passenger seat ventilation system of any preceding claim, wherein the one or more partitions are configured to slide in response to reclining the one or more passenger seats.

11. The aircraft passenger seat ventilation system of any preceding claim, wherein the one or more partitions are detachable.

12. The aircraft passenger seat ventilation system of any preceding claim, wherein the one or more partitions are at least one of opaque, translucent, or transparent.

13. The aircraft passenger seat ventilation system of any preceding claim, comprising one or more front covers (300) respectively at each of the one or more passenger seats, wherein each of the one or more front covers generates a ducted air flow at the respective passenger seat.
